# EUROPEAN PATENT SPECIFICATION

(11) **EP 2 013 509 B1**
(45) Date of publication and mention of the grant of the patent: **01.04.2015**
(21) Application number: 07748376.6
(22) Date of filing: 03.04.2007
(51) Int. Cl.: F16D 65/12

(54) **BRAKE DISC AND METAL MEMBER**
BREMSSCHEIBE UND METALLELEMENT
DISQUE DE FREIN ET ÉLÉMENT MÉTALLIQUE

(30) Priority: 19.04.2006 SE 0600854
(43) Date of publication of application: 14.01.2009
(73) Proprietor: Scania CV AB (publ), 151 87 Södertälje (SE)
(72) Inventor: FREDRIKSSON, Rolf, Södertälje (SE)
(86) International application number: PCT/SE2007/050215
(87) International publication number: WO 2007/120108

(56) References cited:
- EP-A1- 0 508 865
- EP-A1- 0 601 465
- FR-A- 1 580 381

## Description

### TECHNICAL FIELD

The invention relates to a brake disc made by casting, said disc has a reinforcement comprising a metal element cast in the disc; said metal element extends round the disc. The invention also relates to a metal element for a brake disc according to the invention.

### BACKGROUND

Brake discs made by casting, e.g. in grey iron or graphite iron, are often subject to severe thermal stresses which may cause deformation of the casting. A practice known from GB patent specification 629 905 for preventing deformation of planar surfaces of brake discs is to manufacture brake discs in the form of composite discs made of steel and graphite cast iron. Castings subject to severe deformation may also sooner or later develop heat cracks which may in their turn cause a rotating brake disc to fracture or split, with consequent risk that portions of it may become detached and be hurled forcibly away from the brake disc.

A disc brake of the kind mentioned above is known from EP 0601465 A1, which discloses a brake disc according to the preamble of claim 1.

### SUMMARY OF THE INVENTION

An object of the invention is to provide a further developed brake disc of the kind mentioned above, which can effectively prevent portions becoming detached from the disc when it is damaged by cracking.

This is achieved by the features indicated in the claims set out below.

According to the invention the metal element also extends transversely to the disc. Hence, in this way the metal element extends both radially and axially, i.e. in three dimensions within the disc 12 in order to be present at many points in the disc and possibly still better prevent the detachment of disc fragments from the disc during operation. In this way it is easier for a cracked disc to stay together until it can be replaced on the occasion of a service operation.

According to the invention, the metal element comprises a wire. In a simple version, the wire may be in the shape of a ring, but it may also extend through the disc in many other ways, e.g. in a spiral.

According to an embodiment of the invention, the metal element comprises a mesh. In this way the reinforcement may in an easy and effective way comprehensively extend through the whole disc.

Other features and advantages of the invention are indicated by the following detailed description and the claims.

### BRIEF DESCRIPTION OF THE DRAWINGS

FIG. 1 depicts schematically part of a brake disc according to the invention.
FIG. 2 depicts schematically part of a brake disc according to an embodiment of the invention; and
FIG. 3 depicts an embodiment of a metal element according to the invention.

### DETAILED DESCRIPTION OF AN EMBODIMENT EXAMPLE

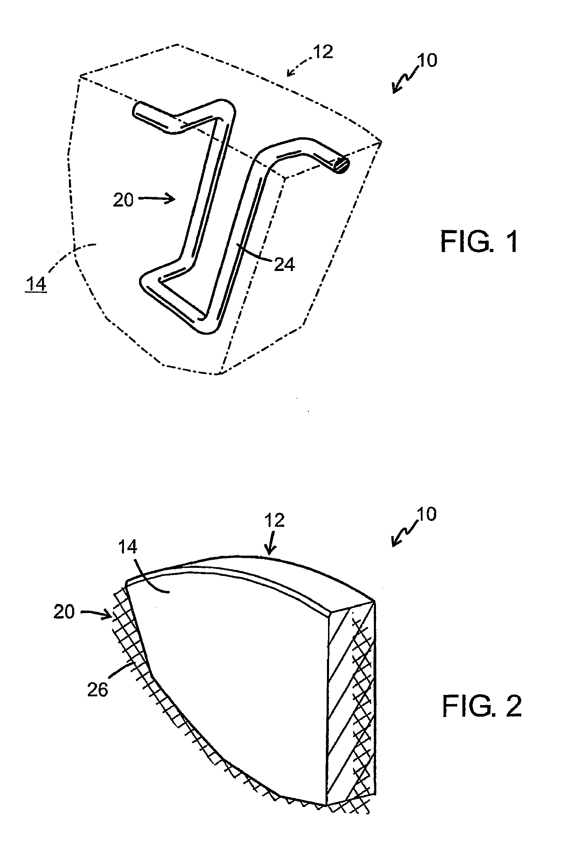

The embodiment example according to FIG. 1 depicts a part of a brake disc, which may be a part of a double-disc brake disc arrangement 10 comprising two brake discs. The brake discs, which are made by casting, are adapted, in an undepicted conventional manner, to being connected to a rotatable shaft which they can brake by their planar outsides 14 being placed in engagement with undepicted brake linings of a likewise undepicted brake mechanism.

To prevent the brake discs from disintegrating as a result of cracking due to thermal stresses, each disc 12 has, according to the invention, a reinforcement cast in it in the form of a metal element 20 which extends round the disc 12.

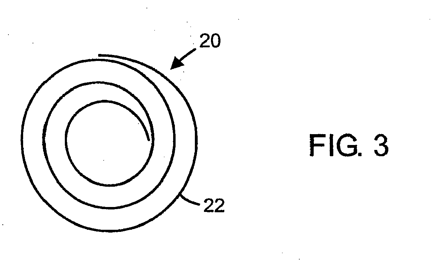

In the configuration according to FIG. 1, each metal element 20 comprises a steel wire 22 made of, for example, spring steel. The steel wire 22 has in this configuration the shape of a circular ring in the form of a bent steel wire 24 cast-in the disc 12. The steel wire extend both radially and axially, i.e. in three dimensions within the disc 12 in order to be present at many points in the disc 12 and prevent the detachment of disc fragments from the disc 12. The steel wire may also extend in many other ways through the disc 12. In FIG. 3 the wire 22 extends approximately in a spiral. The spiral is not planar, since its turns may also be mutually displaced in the axial direction, i.e. transversely to the brake disc (not depicted).

In FIG. 2, the metal element 20 comprises a metal mesh 26. In this embodiment the mesh 26 extends in the middle of and round the disc 12, but it may also extend in transverse directions in the disc 12 (not depicted). A plurality of meshes 26 may also be cast in alongside one another in the disc (not depicted).

The description set out above is primarily intended to facilitate comprehension and no limitations of the invention are to be construed therefrom. The modifications which will be obvious to one skilled in the art reading the description can be implemented without departing from the invention according to the claims set out below.

## Claims

1. A brake disc made by casting, said disc (12) has a reinforcement in order to prevent detachment of disc fragments, the reinforcement comprising a metal element (20) cast in the disc (12), said metal element (20) extends round the disc (12), **characterised in that** said metal element (20) comprises a wire or has the shape of a mesh which extends both radially and axially within the disc 12.

2. A brake disc according to any one of the foregoing claims, whereby the metal element (20) has the shape of a ring (22).

3. A brake disc according to any one of the foregoing claims, whereby the metal element (20) has the shape of a spiral (22).

## Patentansprüche

1. Bremsscheibe, die durch Gießen hergestellt ist, wobei die Scheibe (12) eine Verstärkung aufweist, um ein Ablösen von Bruchstücken der Scheibe zu verhindern, wobei die Verstärkung ein Metallelement (20) umfasst, das in die Scheibe (12) eingegossen ist, wobei sich das Metallelement (20) um die Scheibe (12) herum erstreckt, **dadurch gekennzeichnet, dass** das Metallelement (20) einen Draht umfasst oder die Form eines Netzes aufweist, wobei dieses sich sowohl radial als auch axial in der Scheibe (12) erstreckt.

2. Bremsscheibe nach einem der vorhergehenden Ansprüche, wobei das Metallelement (20) die Form eines Rings (22) aufweist.

3. Bremsscheibe nach einem der vorhergehenden Ansprüche, wobei das Metallelement (20) die Form einer Spirale (22) aufweist.

## Revendications

1. Disque de frein fabriqué par moulage, ledit disque (12) possédant un renfort évitant le détachement de fragments du disque, le renfort comprenant un élément métallique (20) moulé dans le disque (12), ledit élément métallique (20) s'étendant autourdu disque (12), **caractérisé en ce que** ledit élément métallique (20) comprend un fil ou a la forme de mailles qui s'étendent à la fois radialement et axialement dans la masse du disque 12.

2. Disque de frein selon l'une quelconque des revendications précédentes, dans lequel l'élément métallique (20) a la forme d'un anneau (22).

3. Disque de frein selon l'une quelconque des revendications précédentes, dans lequel l'élément métallique a la forme d'une spirale (22).
